Europäisches Patentamt

European Patent Office

Office européen des brevets

(11) Publication number: **0 065 858**
**B1**

# (12) EUROPEAN PATENT SPECIFICATION

(45) Date of publication of patent specification: **10.10.84**

(21) Application number: **82302464.1**

(22) Date of filing: **14.05.82**

(51) Int. Cl.³: **C 09 K 5/04,** C 09 K 5/02,
F 25 B 15/00, F 25 B 17/00,
F 25 B 29/00, B 01 J 19/04

(54) **Working fluid for heat pumps.**

(30) Priority: **19.05.81 GB 8115312**

(43) Date of publication of application:
**01.12.82 Bulletin 82/48**

(45) Publication of the grant of the patent:
**10.10.84 Bulletin 84/41**

(84) Designated Contracting States:
**DE FR GB NL SE**

(56) References cited:
**FR-A-2 465 970**
**US-A-2 496 459**
**US-A-2 511 993**
**US-A-3 524 815**
**US-A-3 580 759**
**US-A-3 609 087**
**US-A-4 018 694**

(73) Proprietor: **Exxon Research and Engineering
Company**
**P.O.Box 390 180 Park Avenue**
**Florham Park New Jersey 07932 (US)**

(72) Inventor: **Moss, Gerald**
**Trevose Sarajac Avenue**
**East Challow Wantage Oxfordshire (GB)**

(74) Representative: **Field, Roger Norton et al**
**ESSO Engineering (Europe) Ltd. Patents &
Licences Apex Tower High Street**
**New Malden Surrey KT3 4DJ (GB)**

Courier Press, Leamington Spa, England.

## Description

This invention relates to a process of using a working fluid in a heat pump.

Water is a desirable working fluid for adsorption heat pumps because of its high latent heat of vaporisation and because it is non-toxic. However it has two disadvantages, namely its relatively high freezing point and its low vapour pressure at desirable evaporation temperatures.

It is not desirable to use inorganic freezing point depressants because they have the unfortunate property of lowering the vapour pressure of the water solution still further.

However surprisingly we have found that a certain organic freezing point depressant may be used which does not appreciably lower the partial pressure of water vapour above the solution and which will allow water to be used in conjunction with hydrophobic adsorbents such as activated charcoal. This organic depressant is n-propanol and it forms an azeotrope with water, the weight percent of water varying from about 28 to 32 according to the temperature.

According to this invention a process of sorption is one in which a sorbate comprising an azeotrope of n-propanol and water is desorbed from a sorbent by heating said sorbent, the desorbed sorbate is condensed, condensed sorbate is evaporated and the evaporated sorbate is sorbed by the sorbent, thereby evolving heat of sorption. By the words "sorbate", "sorbent" and "sorption" we mean respectively "asborbate or adsorbate", "absorbent or adsorbent" and "absorption or adsorption".

U.S.—A—4018694 describes and claims a liquid absorbent-refrigeration system which is a solution containing 10—50 wt% of a lower aliphatic alcohol miscible with water, 10—50 wt% of water and 40—70 wt% of a halide of an alkali metal or of an alkaline earth metal.

FR—A—2465970 describes and claims a process of refrigeration and mentions the use of charcoal or zeolites as adsorbents.

U.S.—A—2511993 discloses a method of refrigeration using a refrigerant mixture comprising monochlorodifluoromethane and propane, these refrigerants being capable of forming an azeotropic mixture.

None of these documents disclose or suggest the use of azeotrope of n-propanal and water, let alone in the above defined process of sorption.

The azeotrope of n-propanol and water has been found to have the following properties:

| Equilibrium vapour pressure | | T°C | Wt % $H_2O$ in vapour |
| --- | --- | --- | --- |
| mm Hg | (n m. bar) | | |
| 47 | (63) | — | 31.8 |
| 200 | (268) | 56.68 | 29.6 |
| 400 | (536) | 71.92 | 29.0 |
| 600 | (804) | 81.68 | 28.5 |
| 740 | (990) | 87.0 | 28.3 |
| 1790 | (2400) | 110.0 | 27.8 |

About 30 wt% water in the vapour amounts to 58.8% by volume and partial pressure. Thus at a temperature of 56.68°C pure water exerts a vapour pressure of approximately 128 mm Hg (171 m.bar) whereas the partial pressure of water vapour above the azeotrope at that temperature is approximately .59 × 200 mm Hg or approximately 117 mm Hg. (156 m.bar) Thus it can be seen that the vapour pressure has not been appreciably lowered and at the same time the azeotrope will freeze at a temperature which is appreciably lower than 0°C i.e. at −8°C to −13°C.

This azeotrope can be used in adsorption or absorption processes. In the former the adsorbent will usually be a substance like a zeolite molecular sieve, e.g. the 4A or Y type, activated charcoal and silica gel. When the adsorbate i.e., n-propanol-water azeotrope, is adsorbed by the adsorbent, heat of adsorption will be evolved and this heat can be transferred elsewhere, for example to another part of a heat pump or for delivery to the load. This transfer is usually carried out by heat exchange, by the use for example of a heat exchanger, the coils of which are housed inside the absorber and which are surrounded by adsorbent.

After adsorption the azeotrope will have to be desorbed from the adsorbent if the process is to be cyclic. This is usually achieved by insertion of a heat exchanger in the adsorbent housed in the adsorber. Alternatively an electrical resistive heater can be located in the adsorbent housed in the adsorber.

Systems employing an adsorber also can make use of a heat of fusion heat store. In such systems the adsorbate vapour which is driven off from the adsorber is usually condensed in the heat of fusion heat store. In such heat stores there is a plurality of receptacles housing a substance with a relatively high melting point and a relatively high heat of fusion, for example stearic acid. The heat of condensation of the adsorbate as it condenses in the heat of fusion heat store is transmitted to this relatively low melting substance which then melts. In this way heat is stored in this substance housed in the receptacles. When heat is abstracted from this heat store the substance freezes, evolving latent heat of fusion.

Processes and systems involving the adsorption of an adsorbate by and adsorbent and where an n-propanol-azeotrope can be used as the adsorbate include those claimed in our prior patent applications GB 8038283, (European 81305627.2), GB 8039157 and GB 8111392. (Publications 2088546 A, 2091411 A and 2088548 A respectively) GB Application 8038283 claims a heating system wherein solar energy is used to supply heat to a heat of fusion heat store, adsorbate is stripped from adsorbent in an adsorber and thereafter condensed, the heat of condensation being delivered to the load, condensed adsorbate is sent to an evaporator adsorbate is vaporized in the evaporator and vaporised adsorbate is adsorbed in the adsorber, the heat of adsorption being delivered to the load.

GB Application 8039157 claims a combined adsorption and absorption process in which an external source of heat is used to desorb adsorbate from adsorbent housed in an adsorber. The adsorbate vapour is condensed and the latent heat of condensation used to remove adsorbate from the working fluid in the generator of the absorption system.

GB Application 8111392 claims a method of obtaining heat wherein adsorbate is evaporated from an evaporator and thereafter adsorbed by an adsorbent in an adsorber, the latent heat of adsorption providing heat to the load and thereafter the adsorbate is desorbed from the adsorbent and desorbed adsorbate condensed in a heat of fusion heat store and the substance housed therein melted and thereafter solidifying, the latent heat of fusion providing heat to the load.

When the azeotrope is used in absorption processes where it acts as an adsorbate, the absorbent is for example an aqueous alkali metal halide, e.g. aqueous lithium bromide or lithium chloride.

The adsorption process can be the conventional process of absorption wherein absorbate is driven off from a generator by heat supplied externally, vaporised absorbate is condensed in a condenser, rejecting heat of condensation, condensed absorbate after being expanded is sent to an evaporator where it evaporates and from the evaporator vaporised absorbate is delivered to an absorber where the heat of absorption is rejected. Weak working fluid (i.e. absorbate plus absorbent) is pumped from the absorber to the generator and strong working fluid is delivered from the generator to the absorber via an expansion valve.

Such an absorption process can be used in conjunction with an adsorption process as described in our GB patent application 8039157 (GB 2091411 A) wherein the heat supplied to the generator is obtained from the latent heat of condensation of adsorbate vapour, said vapour being desorbed from adsorbent housed in an adsorber. Another such process is that described in our GB patent application 8017030 (GB 2076523 A) wherein the heat supplied to the generator is obtained from a solar panel or other source of heat.

## Example

A sorber was charged with a gel of lithium bromide and n-propanol-water azeotrope supported in a porous matrix of coke breeze. The azeotrope was evaporated from an evaporator at a temperature of below 0°C and sorbed by the sorbent. Heat of sorption was evolved at a temperature of about 60°C and delivered to the load.

Subsequently this azeotrope was desorbed by heat resistive heater and then passed to a condenser and the azeotrope was then condensed in a heat of fusion heat store and returned to the evaporator. This cycle of sorption and desorption was then repeated indefinitely.

## Claims

1. A process of sorption wherein a sorbate comprising an azeotrope of n-propanol and water is desorbed from a sorbent by heating said sorbent, the desorbed sorbate is condensed, condensed sorbate is evaporated and the evaporated sorbate is sorbed by the sorbent, thereby evolving heat of sorption.

2. A process according to claim 1 wherein the sorption is adsorption.

3. A process according to claim 2 wherein the adsorbent is a zeolite molecular sieve.

4. A process according to either of claims 2 and 3 wherein the heat of adsorption is delivered to the load.

5. A process according to claim 4 wherein the desorbed azeotrope is condensed in a heat of fusion heat store, the heat of condensation thereby evolved melting a relatively low melting and relatively high heat of fusion substance housed in receptacles housed in the heat store.

6. A process according to claim 1 wherein the sorption is absorption.

7. A process according to claim 6 wherein the absorbent is an aqueous alkali metal halide.

8. A process according to either of claims 6 and 7 wherein the azeotrope is desorbed from a generator by external heat, the desorbed azeotrope is condensed in a condenser, condensed azeotrope after being expanded is sent to an evaporator and the evaporated azeotrope is delivered from the evaporator to the absorber where it is sorbed, absorbate plus absorbent as working fluid is pumped from the absorber to the generator and working fluid is delivered from the generator to the absorber via an expansion valve.

9. An azeotrope of water and n-propanol whenever sorbed by sorbent by the process according to any one of the preceding claims.

## Patentansprüche

1. Sorptionsverfahren, bei dem eine sorbierte Substanz, die ein Azeotrop von n-Propanol und Wasser aufweist, von einer sorbierenden Substanz durch Erwärmung dieser Substanz desorbiert, die desorbierte Substanz kondensiert, die kondensierte Substanz verdampft und die verdampfte Substanz von der sorbierenden Substanz sorbiert wird, wobei Sorptionswärme abgegeben wird.

2. Verfahren nach Anspruch 1, bei dem die Sorption Adsorption ist.

3. Verfahren nach Anspruch 2, dadurch gekennzeichnet, daß die sorbierende Substanz eine Zeolith-Molekularsieb ist.

4. Verfahren nach Anspruch 2 oder 3, wobei die Adsorptionswärme an die Last abgegeben wird.

5. Verfahren nach Anspruch 4, dadurch gekennzeichnet, daß das desorbierte Azeotrop in einem Schmelzwärme- Wämespeicher kondensiert wird, wobei die dabei abgegebene Kondensationswärme eine Substanz schmilzt, die verhältnismäßig niedrig schmilzt, eine verhältnismäßig hohe Schmelzwärme hat und in Behältern untergebracht ist, die in dem Wärmespeicher eingeschlossen sind.

6. Verfahren nach Anspruch 1, bei dem die Sorption Absorption ist.

7. Verfahren nach Anspruch 6, dadurch gekennzeichnet, daß die sorbierende Substanz ein wäßriges Alkalimetallhalogenid ist.

8. Verfahren nach Anspruch 6 oder 7, dadurch gekennzeichnet, daß das Azeotrop von einem Generator durch externe Wärme desorbiert, das desorbierte Azeotrop in einem Kondensator kondensiert, das kondensierte Azeotrop nach dem Expandieren in einen Verdampfer geleitet und das verdampfte Azeotrop von dem Verdampfer zu dem Absorber befördert wird, wo es sorbiert wird, wobei die absorbierte Substanz plus die sorbierende Substanz als Arbeitsflüssigkeit von dem Generator durch ein Expansionsventil zu dem Absorber gefördert wird.

9. Ein Azeotrop von Wasser und n-Propanol, welches durch das Verfahren nach einem der vorhergehenden Ansprüche von einer sorbierten Substanz sorbiert ist.

## Revendications

1. Procédé de sorption caractérisé en ce qu'un sorbat comprenant un azéotrope de n-propanol et d'eau est désorbé à partir d'un sorbant par chauffage de ce sorbant, le sorbat désorbé est condensé, le sorbat condensé est évaporé est le sorbat évaporé est sorbé par le sorbant, dégageant ainsi la chaleur de sorption.

2. Procédé selon la revendication 1, caractérisé en ce que la sorption est une adsorption.

3. Procédé selon la revendication 2, caractérisé en ce que l'adsorbant est un tamis moléculaire de zéolite.

4. Procédé selon l'une des revendications 2 ou 3, caractérisé en ce que la chaleur d'adsorption est cédée à la charge.

5. Procédé selon la revendication 4, caractérisé en ce que l'azéotrope désorbé est condensé dans un dispositif de stockage de chaleur à chaleur de fusion, la chaleur de condensation ainsi dégagée fondant une substance à point de fusion relativement bas, et à chaleur de fusion relativement élevée logée dans des réceptacles eux-mêmes logés dans le dispositif de stockage de chaleur.

6. Procédé selon la revendication 1, caractérisé en ce que la sorption est une absorption.

7. Procédé selon la revendication 6, caractérisé en ce que l'absorbant est une solution aqueuse d'halogénure de métal alcalin.

8. Procédé selon l'une des revendications 6 ou 7, caractérisé en ce que l'azéotrope est désorbé à partir d'un générateur par de la chaleur extérieure, l'azéotrope désorbé est condensé dans un condenseur, l'azéotrope condensé, après avoir été détendu, est envoyé à un évaporateur et l'azéotrope évaporé est envoyé de l'évaporateur à l'absorbeur où il est sorbé, l'absorbat plus l'absorbant constituant l'agent réfrigérant sont envoyés par pompage de l'absorbeur au générateur et l'agent réfrigérant est envoyé du générateur à l'absorbeur par l'intermédiaire d'une soupape de détente.

9. Azéotrope d'eau et de n-propanol chaque fois qu'il est sorbé par un sorbant par le procédé selon l'une quelconque des revendications précédentes.